Europäisches Patentamt

(19) European Patent Office

Office européen des brevets

(11) Publication number: **0 013 305**
A1

(12) **EUROPEAN PATENT APPLICATION**

(21) Application number: **79104287.2**

(22) Date of filing: **02.11.79**

(51) Int. Cl.³: **C 04 B 31/34**
E 04 C 5/07, B 32 B 13/02
B 29 D 31/00

(30) Priority: **03.11.78 DK 4927/78**

(43) Date of publication of application:
**23.07.80 Bulletin 80/15**

(84) Designated Contracting States:
**AT BE CH DE FR GB IT LU NL SE**

(71) Applicant: **Dansk Eternit-Fabrik A/S
Sohngaardsholmsvej 2 P.O. Box 763
DK-9100 Aalborg(DK)**

(72) Inventor: **Ottosen, Jorgen Albert
110, Standvejen
DK-2900 Hellerup(DK)**

(72) Inventor: **Krenchel, Herbert Edwards
55, Sundvaenget
DK-2900 Hellerup(DK)**

(72) Inventor: **Balslev, Jorgen
45 Rude Vang
DK-2840 Holte(DK)**

(72) Inventor: **Madsen, Laust Orum
83, Aaskraenten Saedding
DK-6700 Esbjerg(DK)**

(74) Representative: **Patentanwälte Dipl.-Ing. A. Grünecker,
Dr.-Ing. H. Kinkeldey, Dr.-Ing. W. Stockmair, et al,
Dr. rer. nat. K. Schumann, Dipl.-Ing. P.H. Jakob, Dr. rer.
nat. G. Bezold Maximilianstrasse 43
D-8000 München 22(DE)**

(54) **Fibre-reinforced composite material having an inorganic binder matrix, reinforcing fibrillated tows and webs.**

(57) A fiber-reinforced composite material with inorganic binder such as Portland cement. Fiber reinforcement is continuous fibrous structure, typically a flat woven web of flat fibrillated tow bands of polypropylene prepared by stretching a polypropylene film in a ratio of at least 1:15 and fibrillating by means of a rotating needle or cutter roller to obtain fibrous elements of from about 2 to about 35 dtex.

Fig. 3.

Croydon Printing Company Ltd.

EP 0 013 305 A1

A Fiber-Reinforced Composite Material.

The present invention provides a fiber-reinforced composite material with an inorganic binder such as Portland cement, alumina cement fly ash cement, lime, gypsum, diatomaceous earth, puzzolan and mixtures thereof, preferably Portland cement, which composite material may have a relatively high content of reinforcing fiber (typically 5 - 50% by volume, calculated on the material) and a large special fiber surface (typically 10 - 100 $mm^2/mm^3$), in which material a very uniform fiber distribution throughout the material with extraordinarily good bonding between the matrix and fiber along the total surface of each single fiber may be obtained, so that the final cured and hardened composite material, on loading and deformation, behaves as if it were a homogeneous material throughout the full stress/strain range, optimally without forming any kind of visible cracks or microcracks rigth up to the end point of the stress/strain curve on any type of mechanical strain (uni-axial tension, bending, torsion, etc.) beyond the ultimate straining of the matrix material proper.

The invention makes it possible to make a composite material with an extraordinary combination of the best material properties in the fiber material and the matrix.

It is known to build up a composite material as a laminate by laying or rolling, or the like, consecutive layers of the reinforcing material and impregnating it, concomitantly with the laying, with a paste of the inorganic binder and water with optional additives which may, for example, be plasticizer, water-reducing agent, filler material. organic latex emulsion, etc. In the impregnation, it is important to obtain a proper wetting of all the microsurfaces with the paste and to replace air in the reinforcing material with paste to a maximum extent.

In connection with cement matrices, this lamination technique has been attempted with various types of sheet-formed reinforcing material such as web, net or so-called non-woven material of steel wire (chicken wire or more small-meshed proper web), glass yarn web, sheets of laid out glass fibers (so-called glass vliess or glass surfacing matte), mechanically fibrillated net prepared from a stretched plastic tape, open web of plastic monofilaments, and the like. However, due to the too low specific surface of these reinforcing materials in the end product, the uneven distribution of the reinforcing material with large unarmed domains of matrix material in the end product between the reinforcing units (for example in the meshes in an open web), and because of the relatively smooth surface of the fibers or net threads, with consequent insufficient bonding of the cured and hardened cement matrix along the total surface of the single fiber, such known art composite materials have only obtained a certain pseudo-plasticity; as is known from conventional reinforced concrete and ferrocement, there will always occur transverse cracks or microcracks in the matrix material perpendicular to the main tensile direction when the material is strained, all the way up through the essential part of the stress/strain curve, that is, from the critical point at which the elongation at rupture of the matrix is exceeded and up to the end point of the curve in which the reinforcement breaks.

According to the present invention, the composite material is prepared using reinforcing units comprising at least one layer of a continuous fibrous structure the fibers of which may be prepared by stretching a plastic film in a ratio of at least 1:15 to obtain a film thickness of about 10 - 60 microns and fibrillating the stretched material by means of a rotating needle or cutter roller to obtain fibrous elements of from about 2 to about 35 decitex (dtex). By this technique, a fibrillated tow may be obtained in which the fibrous elements have a tensile strength of at least 4000 kp/cm$^2$, a modulus of elasticity of at least 7 x 10$^4$ kp/cm$^2$, typically at least 10$^5$ kp/cm$^2$, and an elongation at rupture of at the most 8%, often at the most 6%, and show non-smooth edges with fibrils extending therefrom. Preferably, the fibrillated tow is made by stretching a polypropylene film in a ratio of at least 1:15, e.g. a ratio of 1:17 or even higher, such as at least 1:20, e.g. 1:23, to obtain a film thickness of about 10 - 60 microns, and treating the stretched material by means of a rotating needle or cutter roller to obtain fibrous elements of from about 2 to about 35 dtex, and the polypropylene starting material is preferably one which is substantially pure polypropylene homopolymer, and thus, free of e.g. admixture with polyethylene. A heat-stabilization (annealing) is preferably performed either immediately prior to the fibrillation or subsequent to the fibrillation. The preparation of fibers by stretching and fibrillating a film in the manner stated above, is described in commonly assigned U.S. Patent Application Serial No. 902,920, filed on May 4, 1978, and in the below exampl. If desired, the fibrous elements or the surface of the plastic films from which they are made may additionally have been treated with an inorganic fine-grained material such as by blasting technique such as sand blasting, or abrasion, to promote the formation of a rough surface and thereby enhance the anchoring of the fibrous elements in the matrix. Another way of increasing the affinity between the fibers and a cement matrix is by corona treatment and application of a hydrophilic lubricant to obtain a surface tension of approximately the same value as the surface tension of water, that is, about 70 – 75 $dyn/cm^2$. The corona treatment may be performed on the plastic film prior to the fibrillation, or on the fibrillated tows subsequent to the fibrillation.

When using continuous fibrous structures of the kind described above as reinforcement in cement matrices, it has been found that the reinforcement, due to its favourable combination of tensile strength modulus of elasticity, elongation, etc., cooperates with the matrix in a unique manner and is capable of imparting to the matrix material a rupture behaviour which is different from the above-mentioned known rupture behavior of fiber-reinforced cement matrices, and it becomes possible to obtain composite materials with quite extraordinary strength and straining properties, with full utilization of the strength of the reinforcement and its straining properties (ultimate elongations at rupture being of the order of per cents where the ultimate strain of the matrix proper is only about one per mill or less) as the matrix does not crack, but is only successively losing its bonding between the single particles in the tensile direction so that the porosity of the matrix material is slightly increased as the reinforcement takes over the full load in the domains subjected to tension. Such a way of internal rupture and such a co-operation between the components has previously only been known from high-quality asbestos cement.

Preferably, the continuous fibrous structure is a web, especially a flat woven web, that is, woven from flat bands used in both directions of the web, the width of the flat bands suitably being from about 3 mm to about 10 mm, preferably in the range of about 4 mm - 8 mm for example 5 mm. Due to the very uniform distribution of the single fibrous elements in the flat web throughout the surface of the web, the fiber content will inherently become high in the composite material built up using such webs according to the invention.

Thus, a fiber volume content of 10 - 40% is easily obtained. Because of the mutual fixation of the bands in the web, an almost completely uniform distribution of single fibers in the end product is obtained, but on the other hand, the fact that the web is built up of flat bands of fine fibrous elements makes it possible to work the matrix paste completely into the web to thoroughly wet the full surface of all single fibers and fibrils.

Although the preferred embodiment of the web is the flat web as described above, it is also contemplated that the web could be a knitted web of relatively loose fibrous yarns or bands. However, in accordance with the principle of the invention, the fiber band yarn should not be twisted to any substantial ... nt and should preferably be untwisted, in order to avoid domains inside twisted fiber yarns which are not thoroughly wetted with the paste.

It is also within the scope of the present invention to use the ... tinuous fibrillated tows per se as fiber-reinforcement in composit materials, for example composite materials in which the binder is Portland cement, for example in accordance with the well-known fiber-reinforcing technique known as filament winding. For this purpose or for other purposes where fibrillated tows per se are used as fiber-reinforcement material in composite materials, they are preferably made from polypropylene in the manner described above, and the fibrillated tow is preferably a flat band having a dimension of from a few millimeters up to several centimeters.

Because of the very high strength and abnormous strainability of the composite material containing webs of the invention, especially

0013305

flat webs as described above, the highly fiber-reinforced composite materials of the invention can advantageously be used for a large number of special purposes, either by application in a relatively thin layer onto the surface of other construction elements of greater cross-section, or as independent plate elements, shell constructions, or the like.

One interesting utility of the composite material of the invention is as a membrane coating in a very thin layer built up directly upon an ordinary concrete surface to obtain water-tightness even where there is strong cracking of the concrete immediately below the coating. Other interesting utilities of the composite material of the invention is as reinforcing layer in sandwich elements, coating and reinforcing layer on block-bond masonry and the like, in which the web is so to say "papered" onto the substrate by means of the cement paste.

Simple hand bending experiments with plate specimens prepared using flat webs in accordance with the invention have shown that an astonishing co-operation between fibers and matrix is obtained, the final composite material being substantially more plyable than an ordinary cement plate, and as there are fibers and reinforcing bands all over the material (in the same way as in glass fiber-reinforced plastic materials), the ultimate strength of the composite material can be predicted directly from the tensile strength of the fibers, the degree of reinforcement (percentage fiber volume) and the orientation of the reinforcement in relation to the tensile direction, in the same manner as the mechanical properties can be calculated for glass fiber-reinforced polyester and epoxy, which means that the elongation at rupture of the composite material will be substantially identical with the elongation at rupture of the fiber material, as the matrix material around the reinforcement only loses its coherence in the tensile direction at a very early time and thereafter successively becomes somewhat more porous up to the end point of the stress/strain curve where rupture occurs because the reinforcement breaks. Hence, the mechanical properties of this type of composite material and the expected stress/strain curve of the material can be predicted with good accuracy.

The invention also relates to a reinforcement web per se and to fibrillated tow per se, the fibrillated tow being of the type described above, especially a reinforcement web in which the warp and the weft are flat bands of the type described above, typically made from polypropylene film bands of about 10 - 40 mm which have been stretched and fibrillated as described above to result in a fibrillated tow, such tow being used as weft and warp in a web prepared in such a manner that the width of the tow is typically between 3 and 10 mm, e.g. between 4 and 8 mm, but also larger widths of flat fibrillated tows may be used.

The invention is explained in greater detail with reference to the drawing, in which Fig. 1 shows a plate-shaped test specimen comprising 8 layers of flat polypropylene reinforcing web bent to a high degree, Fig. 2 shows a stress/strain curve typical to a composite material of the invention, and Figs. 3 and 4 show a reinforcement web of flat polypropylene fiber filament bands according to the invention.

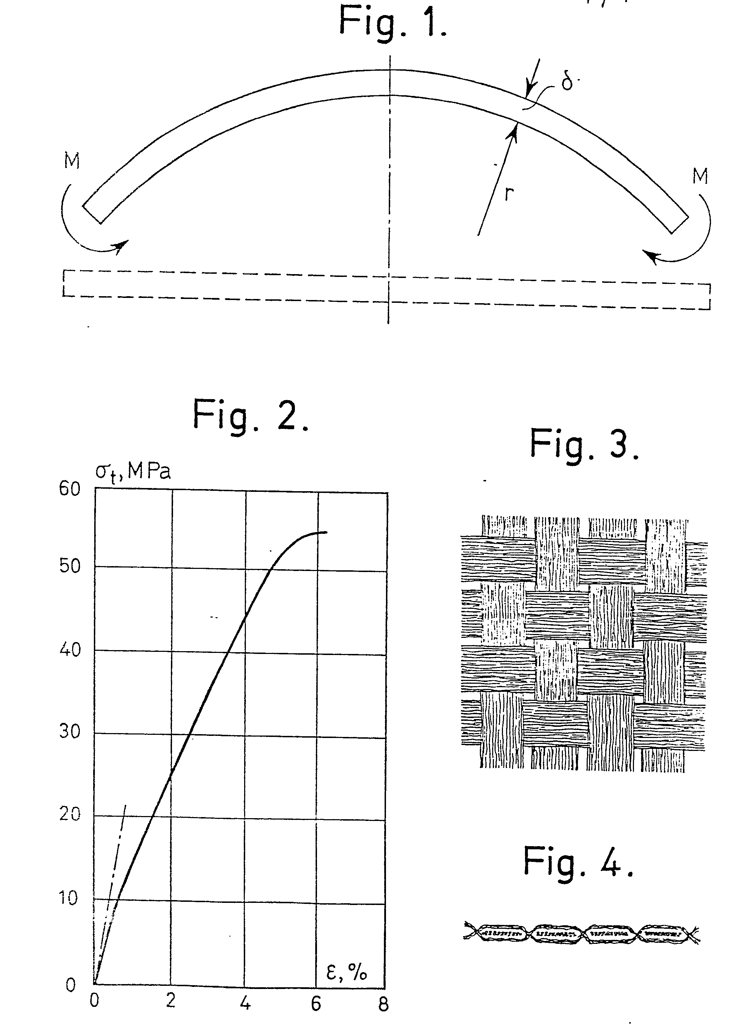

Figs. 1 and 2 are explained in greater detail in connection with the examples.

The warp and weft of the web shown in Fig. 3 ... both constituted by polypropylene fibrillated tow of a width of about 5 mm prepared as described in Example 1. Fig. 3 is a plane view of the web. and Fig. 4 is a cross section of the web. It will be noted that the fibers in the web are arranged in such a flat and accessible way that the total web may easily be wetted with a cement paste, and that there is little area left in the meshes of the web.

Example 1.

Web of Fibrillated Polypropylene Tow.

The polypropylene used was GWE-23 from ICI with melt index of 3 g/10 minutes measured according to DIN MFI 230/2.16.

In a standard extrusion/stretch plant, the polypropylene was extruded into a blown tubular film at an extruder temperature of 180 - 220°C, and the tubular film was cooled with cooling air at 18 - 20°C and cut into 40 film bands.

From the drawing station following the extruder, the film was passed through a hot air oven with an air temperature of 180°C and an air velocity of 25 m/second. By using a higher roller speed in the stretch station following the hot air oven, the film was stretched in a ratio of 1:17. Thereafter, the film was heat-stabilized by passing a hot air oven with an air temperature of 180°C and an air velocity of 25 m/second, the film velocity being about 90 m/second.

The thickness of the film was then 20 micron.

The film was fibrillated to form fibrous elements of from 2 to 30 dtex by means of a Reifenhäuser FI-S-0800-03-01 fibrillator with 13 needles per cm.

The fibrillation ratio (= the ratio between the film advancing velocity and the circumferential velocity of the fibrillator roll) was 1:3. Thereafter, 1% by weight of hydrophilic avivage (Henkel LW 421) was applied as an 1:9 aqueous slurry.

The resulting flat fibrillated tows were woven in a conventional way to obtain a flat web with a weight of about 130 g/cm$^2$.

Example 2.

Preparation of Fibrillated Polypropylene Tow.

The polymer employed was polypropylene GWE 23 from ICI with a melt index of 3 g/10 minutes measured according to DIN MFI 230/2.16.

In a standard extrusion/strech plant, the polypropylene was extruded into a blown tubular film at an extruder temperature of 180 - 220°C, and the tubular film was cooled with cooling air at 18 - 20°C and cut into 40 bands of a width of about 15 mm each.

From the drawing station following the extruder, the film was passed through a hot air oven with an air temperature of 180°C and an air velocity of 25 m/second. By using a higher roller speed in the stretch station following the hot air oven, the film was stretched in a ratio of 1:25. Thereafter, the film was heat-stabilized by passing a hot air oven with an air temperature of 180°C and an air velocity of 25 m/second, the film velocity being about 90 m/second.

The thickness of the film was then about 20$\mu$.

After the stretching and heat-stabilization, the film was subjected to a corona treatment using a 12,000 Watt Vetaphona equipment: Generator T 12,000 AX, external transformer TH 12025 for 3 x 380 volt, 50 HZ using a roller/electrode system TW 4000 EN/SP. The equipment comprised four rollers, two on which the film passed over the rollers and was treated on its upper side from metal bar electrodes arranged over the rollers, and thereafter two under which the film passed and was treated from metal bar electrodes arranged under the rollers. The distance between the film and the electrodes was about 1-3 mm. After the corona treatment, the surface tension of the film had been increased to 64.3 dyn/cm, as assessed by measuring on a sample of the film.

The film was fibrillated to form fiber elements of from 2 to 30 dtex by means of a Reifenhäuser FI-S-0800-03-01 fibrillator with 13 needles per cm in single needle rows. The fibrillation ratio (the ratio between the film advancing velocity and the circumferential velocity of the fibrillator roll) was 1:3. Thereafter, 1% by weight of hydrophilic avivage was applied as a 1:9 solution. The resulting flat bands of about 10 mm were wound up in rolls.

The tensile strength of the fibers prepared in this way was 5.9 cN/dtex, the elongation at rupture was 5%, and the modulus of elasticity (1%) was 12,000 N/mm$^2$. The bands had a surface tension of 70 - 75 dyn/cm.

Example 3.

Preparation of Fibrillated Polypropylene Bands.

The polymer employed was polypropylene GWE 23 from ICI with a melt index of 3 g/10 minutes measured according to DIN MFI 230/2.16.

In a standard extrusion/stretch plant, the polypropylene was extruded into a blown tubular film at an extruder temperature of 180 - 220°C, and the tubular film was cooled with cooling air at 18 - 20°C and cut into 40 bands of a width of about 15 mm each.

From the drawing station following the extruder, the film was passed through a hot air oven with an air temperature of 160°C and an air velocity of 25 m/second. By using a higher roller speed in the stretch station following the hot air oven, the film was stretched in a ratio of 1:17.

The film was fibrillated to form fibers of from 2 to 30 dtex in the same manner as described in Example 2. The resulting fibers were heat-stabilized by passing through a hot air oven with an air temperature of 160°C and an air velocity of 25 m/second. After the heat-stabilization, the fibers were corona treated using the same procedure and the same equipment as described in Example 2. Thereafter, 1% by weight of hydrophilic avivage was applied as a 1:9 solution, and the resulting flat bands of about 10 mm were wound up in rolls. The bands had a surface tension of 70 - 75 dyn/cm$^2$.

The tensile strength of the fibers prepared in this way was 5.3 cN/dtex, the elongation at rupture was 6%, and the modulus of elasticity (1%) was 13,000 N/mm$^2$.

Exampel 4.

Membrane Coating.

On a test specimen of concrete, a membrane coating of the composite material is applied on the surface in the manner described above. The web was a flat web of fibrillated polypropylene tows prepared as described in Example 1. The cement paste had a water/cement ratio of 0.40 and contained a water-binding plasticizer (methylcellulose in a concentration of 0.3% by weight calculated on the cement) to obtain easy wetting of the concrete surface and all fiber surfaces with the paste.

By applying two layers of web and scraping or brushing away the excess of paste, a membrane thickness of about 1.7 mm was obtained, and the corresponding thickness when using 3 layers of web was about 2.5 mm.

After curing of the composite coating, the concrete specimen was subjected to a tensile straining in such a way that the concrete underneath the membrane cracked, and it was investigated how wide the cracks in the concrete could be opened before they penetrated through the membrane. It was found that the cracks could be opened about 1.5 mm before the composite membrane comprising 2 layers of web ruptured and up to about 2 mm before the composite membrane comprising 3 layers of web ruptures (normally, the cracks in ordinary reinforced concrete open no more than 0.3 mm, in extreme cases up to about 0.5 mm).

In a corresponding coating made with a glass yarn web with spaced single twisted yarns, it was not possible to obtain full wetting of all the single glass fibers in the reinforcement, and small areas in the mesh openings between the yarns were completely unreinforced, with the result that composite coatings made with such webs only survive opening of the cracks in the concrete to about 0.15 - 0.20 mm before rupture.

Example 5.

Bending Test with Plate Material Built up According to the Invention.

A plate-shaped test specimen was built up from 8 layers of web made as in Example 1, the preparation of the specimen being performed in the same manner as is described in Example 2. The final plate had a thickness of about 6.5 mm and a degree of reinforcement of about 18% by volume.

After hardening, the plate was bent applying a bending moment (M) at two opposite edges as shown in Fig. 1. At a curvature as shown (with a radius of curvature, r, of about 17 times the thickness, δ of the plate), the straining of the material in the tensile side was about 5% and the compression straining in the other side was about 1%, but the material looked fully intact without any visible cracking. On release of the bending loading, the plates flattened out again into a plane configuration such as indicated in the figure.

Example 6.

Tensile Testing with a Plane Test Piece of the Composite Material of the Invention.

A plane test piece prepared in the same manner as in Example 4 was hardened and thereafter loaded in uni-axial tension along one of the main directions of the web in a tensile testing machine. The test piece was equipped with sensitive extensometer permitting plotting of the full stress/strain curve all the way up to rupture.

A typical tensile stress/strain curve for this type of experiment is shown in Fig. 2 in which $\sigma_t$ is the tensile stress in MPa, and $\varepsilon$ is

12

the strain. No transverse cracks or microcracks were observed on the faces of the test piece before final rupture was reached at the end point of the curve.

Example 7.

To show the effect of a roughening of the surface of a stretched polypropylene film by means of mechanical abrasion, a stretched and heat-stabilized polypropylene film prepared as described in Example 1, but not fibrillated, was abraded on both sides by gentle contact with a vibrating polishing apparatus on which was applied emery paper grade 120. A considerable improvement of the bond between a cement matrix and the fiber surface as obtained by this treatment, as seen from tensile tests where two layers of the film had been glued together with a cement matrix.

CLAIMS.

1. A composite material having an inorganic binder matrix and a fiber reinforcement comprising at least one layer a continuous fibrous structure prepared by stretching a plastic film in a ratio of at least 1:15 to obtain a film thickness of about 10 - 60 microns and fibrillating the stretched material by means of a rotating needle or cutter roller to obtain fibrous elements of from about 2 to about 35 dtex.

2. A composite material as claimed in claim 1 in which the continuous fibrous structure is a fibrillated tow or a web.

3. A composite material as claimed in claim 3 in which the web is a flat web of flat fibrillated tow bands having a width of about 3 - 10 mm used as both warp and weft.

4. A composite material as claimed in any of the preceding claims in which the inorganic binder matrix comprises Portland cement and the continuous fibrous structure comprises polypropylene fibers.

5. A composite material having an inorganic binder matrix and a fiber reinforcement comprising at least one layer of a continuous fibrous structure of polypropylene in which the fibrous elements have a tensile strength of at least 4000 $kp/cm^2$, a modulus of elasticity of at least $7 \times 10^4$ $kg/cm^2$ and an elongation at rupture of at the most 8%.

6. A composite material as claimed in claim 14 in which the continuous fibrous structure is a fibrillated tow or a flat web of flat fibrillated tow bands of a width of about 3 - 10 cm used as both warp and weft.

7. A fibrillated tow prepared by stretching a polypropylene film in a ratio of at least 1:15 to obtain a film thickness of about 10 - 60 µ and fibrillating the stretched material by means of a rotating needle or cutter roller to obtain fibrous elements of from about 2 to about 35 dtex.

8. A fibrillated tow of polypropylene in which the fibrous elements have a tensile strength of at least 4000 $kp/cm^2$, a modulus of elasticity of at least $7 \times 10^4$ $kp/cm^2$ and an elongation at rupture of at the most 8%.

9. A fibrillated tow as claimed in claim 7 or 8 in which the polypropylene is substantially pure polypropylene homopolymer.

10. A reinforcing web woven of fibrillated tows as claimed in any of claims 7 - 9.

11. A reinforcing web as claimed in claim 10 which is a flat web of flat fibrillated tow bands having a width of about 3 - 10 mm used as both warp and weft.

Fig. 1.

Fig. 2.

Fig. 3.

Fig. 4.

European Patent Office

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| X | DE – A1 – 2 728 351 (UNIVERSITY OF SURREY et al.) <br> * claims 1, 6, 10, 11, 12; pages 11, 12, 18 * | 1-4, 6,7, 9-11 |
| P,X | DE – A1 – 2 819 794 (DANSK ETERNIT-FABRIK) <br> * claim 8 * | 1,4, 5,7, 8,9 |
| | US – A – 3 591 395 (J.J. ZONSVELD et al.) <br> * column 4, lines 54 to 75; column 5, line 5 * | 1,4, 7,9 |
| A | DE – A – 1 958 342 (T. MURATA) | |

**CLASSIFICATION OF THE APPLICATION (Int Cl.³)**

C 04 B 31/34
E 04 C  5/07
B 32 B 13/02
B 29 D 31/00

**TECHNICAL FIELDS SEARCHED (Int.Cl.³)**

B 29 D 31/00
B 32 B 13/02
C 04 B 13/24
C 04 B 29/04
C 04 B 31/00
C 04 B 43/00
E 04 C  2/00
E 04 C  5/07

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 08-01-1980 | HÖRNER |

EPO Form 1503.1  06.78